# EUROPEAN PATENT APPLICATION

(11) **EP 2 469 365 A2**
(43) Date of publication of application: **27.06.2012**
(21) Application number: 11194225.6
(22) Date of filing: 19.12.2011
(51) Int. Cl.: G05B 19/4065

(54) **Cutting tool abnormality sensing apparatus**

(30) Priority: 23.12.2010 US 977131
(71) Applicant: General Electric Company, Schenectady, New York 12345 (US)
(72) Inventor: Jeyaraman, Satheesh, Niskayuna, NY New York 12309 (US); Harding, Kevin George, Niskayuna, NY New York 12309 (US); Navalgund, Megha, Niskayuna, NY New York 12309 (US); Pfeiffer, John Robert, Niskayuna, NY New York 12309 (US); Venkatakrishnan, Shaileshh Bojja, 600036 Tamil Nadu (IN)
(74) Representative: Williams, Andrew Richard

(57) **Abstract**

A cutting tool abnormality sensing apparatus (200) is disclosed. The apparatus (200) includes an image pickup device (202) for taking individual images of teeth of the cutting tool (100). The apparatus (200) further includes a triggering mechanism (204) for triggering the image pickup device (202) each time a tooth passes along a field of view of the image pickup device (202). One or more light sources (208, 210 and 212) are provided to illuminate the cutting tool (100). Further, the apparatus (200) includes an image processor (220) to process one or more criteria in the individual images for quantifying an extent of abnormality in the cutting tool (100).

## Description

### FIELD OF INVENTION

The present invention relates to cutting tools. More specifically, the present invention relates to an apparatus for sensing abnormality in a cutting tool.

### BACKGROUND

The use of cutting tools for carrying out various machining operations on work pieces is well known in the art. One such cutting tool, broach cutters are used for manufacturing dovetail slots in turbine disks. Cutting tools generally include a set of teeth that come in contact with the work piece during the cutting operations. The set of teeth have various profiles and faces that are subjected to various loads, heat, and abrasion during different cutting operations. Due to repeated use of the cutting tool, one or more cutting teeth may develop abnormalities such as breakage of the teeth, chips, nicks on the teeth etc. Such abnormalities in the teeth may lead to improper machining and the risk of a catastrophic cutter failure. For example, excessively worn or damaged broach cutter worn out teeth may lead to improper dimensioning of the dovetail slot in the turbine disk. This may lead to scrapping of the turbine disk, which may result in heavy financial losses. Thus, the abnormalities in the cutting tool are monitored periodically to detect any damage in the teeth of the cutting tool.

Various prior art solutions have been proposed for monitoring abnormalities in the cutting tools. Generally, a periodic visual inspection is carried out to determine the condition of the teeth. In other solutions, predictive methods are employed that use neural networks to represent cutting tool conditions and then interpret the results to estimate a potential wear development in the cutting tool. In another solution, acoustic emission sensors may be utilized for determining acoustic signatures as a result of crack in the tip of the teeth. However, these solutions are often conducted during the non-operational time of the cutting tool, which may result in a loss of efficiency in a production process. Further, these solutions may fail to effectively determine the condition of the teeth in a real time cutting tool operation.

In light of the foregoing, there exists a need for an apparatus that effectively monitors abnormalities in the cutting tool.

### BRIEF DESCRIPTION OF THE DRAWINGS

FIG. 1 illustrates a schematic diagram of a cutting tool, according to an embodiment of the present invention;
FIG. 2 illustrates a block diagram of the cutting tool abnormality sensing apparatus, according to an embodiment of the present invention;
FIG. 3 illustrates a perspective view of the cutting tool abnormality sensing apparatus, according to an embodiment of the present invention;
FIG. 4 illustrates a perspective view of a triggering mechanism of the cutting tool abnormality sensing apparatus, according to an embodiment of the present invention;
FIG. 5 illustrates an image of abnormality on a broach finisher, according to an embodiment of the present invention; and
FIG. 6 illustrates an image of abnormality on a broach rougher, according to an embodiment of the present invention.

### DETAILED DESCRIPTION OF THE EMBODIMENTS

Embodiments presented herein provide a system and a method for sensing abnormality in a cutting tool. The abnormality in the cutting tool includes, but is not limited to, cutting edge wear, breakage, formation of chips, nicks and cracks on a surface of the cutting tool. The embodiments presented herein disclose a broach cutter as an exemplary cutting tool, however it will be apparent to those skilled in the art that the principles and teachings of the present invention can be applied to any other cutting tool, such as mill cutters, and the like, without departing from the spirit of the present invention.

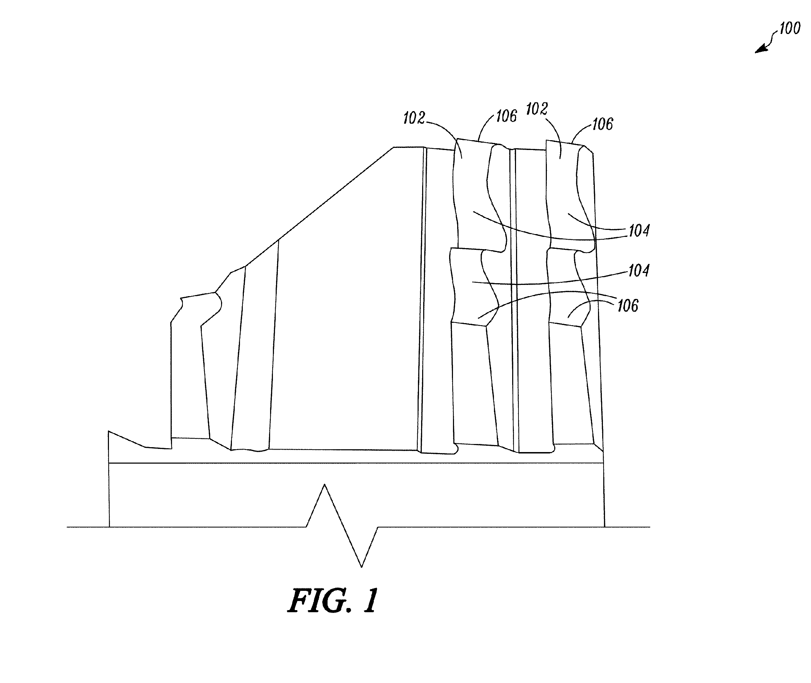

FIG. 1 illustrates a schematic diagram of a conventional broach cutter 100 (hereinafter interchangeably referred as "cutting tool 100" or "broach finisher 100"), according to an embodiment of the present invention. Generally, the broach cutter 100 includes a broach rougher and a broach finisher. In the exemplary embodiment of FIG. 1, the broach finisher 100 is illustrated. The broach cutter 100 may be utilized in various machining operations such as, but not limited to, cutting dovetail slots in turbine disks. Each of the two types of the broach cutters may be utilized for manufacturing dovetail slots in the turbine disks. The broach rougher includes a plurality of straight chisel points (also known as the teeth) disposed on a top face thereof. The broach rougher is generally used for providing initial rough-cuts for removal of material from a work piece (not shown), such as a billet, in one or more cutting cycles. Upon removal of the material by the broach rougher, the broach finisher 100 is utilized to machine the final geometry to the surfaces of the work piece.

The broach finisher 100 includes a plurality of curved chisel points 102 (also known as teeth 102) each having multiple tooth faces. Specifically, the curved chisel points 102 of the broach finisher 100 include regions that cut certain features on the workpiece such as the pressure and clearance faces of an attachment geometry. Viewed from some orientations, some of these regions may be hidden from view. Frequently, the broach finisher 100 is employed on the work piece upon the operation of the rougher. The broach finisher 100 is configured to remove a comparatively smaller quantity of material from the work piece as compared to the material removed by the rougher and to provide a precise finishing to the work piece.

During the operation of the broach cutter 100, the rougher teeth and the finisher teeth repeatedly come in contact with the work piece. Due to such repeated contact, the broach cutter 100 tends to develop one or more abnormalities in the teeth 102 and surface thereof. The abnormality in the broach cutter 100 may include, but is not limited to, wear of the tooth material, breakage of tooth in the cutting tool 100, formation of, nicks and cracks on a surface of the cutting tool 100. The abnormalities on the teeth 102 may develop due to, but not limited to, accumulation of wear on the teeth 102, breakage on the teeth 102, deformation on the teeth 102 and the like.

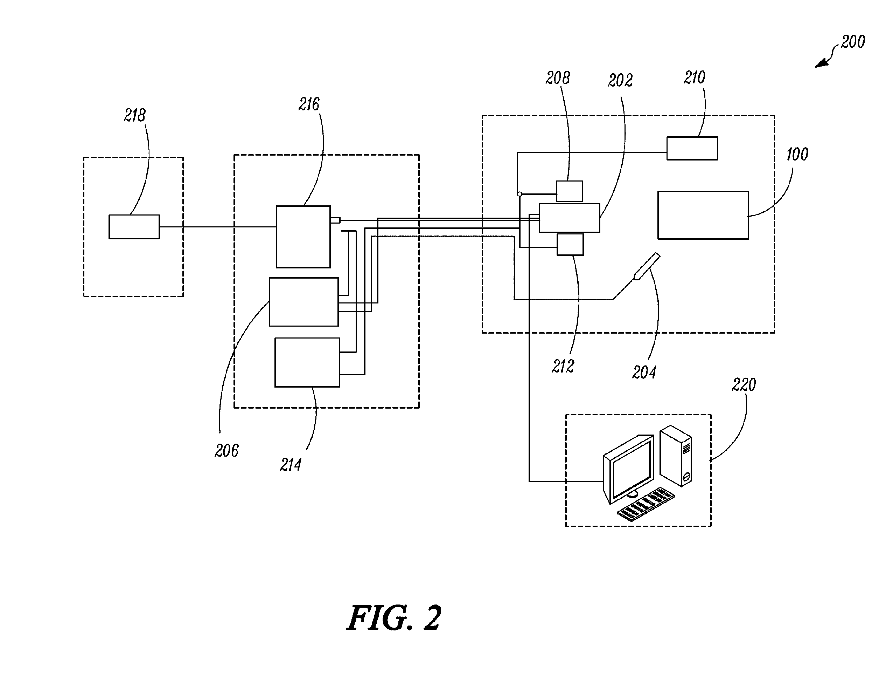

FIG. 2 illustrates a block diagram of a cutting tool abnormality sensing apparatus 200 (hereinafter referred to as apparatus 200), according to an embodiment of the present invention. The apparatus 200 may include an image pickup device 202. In an embodiment of the present invention, the image pickup device 202 includes a digital camera. The image pickup device 202 is configured to take individual images of teeth of the cutting tool 100, such as the broach cutter 100. The image pickup device 202 is positioned at a site opposite to the location of the cutting tool 100, such that the field of view of the image pickup device 202 is towards the teeth of the cutting tool 100. Further, the apparatus 200 may include a triggering mechanism to trigger the image pickup device 202 each time a tooth (not shown in FIG. 2) passes along a field of view of the image pickup device 202. Thus, the image pickup device 202 captures individual images, when triggered, of the teeth in the field of view thereof. In the exemplary embodiment of Fig. 2, the triggering mechanism includes an optical trigger 204. The optical trigger 204 is connected to a trigger controller 206 which in turn is also connected to the image pickup device 202. The trigger controller 206 triggers the image pickup device 202 based on a signal received from the optical trigger 204.

Referring again to FIG. 2, the apparatus 200 may further include one or more light sources to selectively illuminate the cutting tool 100. The one or more light sources may include light emitting diodes. In the exemplary embodiment of FIG. 2, the one or more light sources include three light sources: a first light source 208, a second light source 210 and a third light source 212. The various light sources are configured to selectively illuminate one or more portions of the cutting tool 100. Specifically, the first light source 208 illuminates a first face (the clearance faces 106 of the broach finisher 100) of the teeth, the second light source 210 illuminates the tips of the teeth (the teeth 102 of the broach finisher 100) and the angular faces of the cutting tool 100 (the broach finisher 100), and the third light source 212 and/or the first light source 208 illuminate the front face of the teeth of the cutting tool 100 (broach rougher). The one or more light sources 208, 210 and 212 are coupled to a light controller 214 for selectively customizing the brightness of the light sources. Specifically, the one or more light sources 208, 210 and 212 selectively illuminate an abnormality region of the cutting tool 100. In an embodiment of the present invention, the light sources 208, 210 or 212 are positioned such that the presence of wear regions in the cutting tool 100 causes a specular reflection from the worn regions, showing up as brighter regions in the image captured by the image pickup device 202, when compared with a non-worn region of the cutting tool 100.

The apparatus 200 may further include a battery supply 216 and an alternative power supply 218. In an embodiment of the present invention, the alternative power supply 218 8 may be an alternating mains supply. The battery supply 216 and the alternative power supply 218 may provide the requisite electric power to the one or more light sources 208, 210 and 212, the light controller 214, the trigger controller 206 and the image pickup device 202. In an exemplary embodiment of the present invention, the one or more light sources 208, 210 and 212, the light controller 214, the trigger controller 206 and the image pickup device 202 are coupled to either the battery supply 216 and/or the alternative power supply 218. In another embodiment, the one or more light sources 208, 210 and 212, the light controller 214, the trigger controller 206 and the image pickup device 202 are coupled to the battery supply 216 and the battery supply 216 is in turn coupled with the alternative power supply 218 for charging the battery supply 216.

The apparatus 200 may further include an image processor 220. The image processor 220 is configured to communicate with the image pickup device 202 to receive the individual images captured by the image pickup device 202. The image processor 220 processes the individual images based on one or more criteria to quantify an extent of abnormality in the cutting tool 100. It may be apparent to a person ordinarily skilled in the art that the image processor 220 may employ one or more algorithms or calibration techniques to quantify the extent of abnormality in the cutting tool 100. In an embodiment of the present invention, the quantification of the extent of abnormality in the cutting tool 100 may enable an operator of the cutting tool 100 to judge whether the abnormality is within the acceptable limit. The image processor 220 may recognize the selective illumination of the wear region and one or more characteristics such as location and orientation of the wear region and thus may provide a quantification of the size of such regions. Further, ambient lighting may result in unwanted glare on various portions of the cutting tool 100 such as tapered chamfers and associated bends of the cutting tool 100. In an embodiment of the present invention, the image processor 220 may remove glare associated with the images due to ambient lighting conditions.

The image processor 220 may also include a digital archiving device (not shown) to store the abnormality condition of the cutting tool 100. Specifically, the digital archiving device is configured to store information associated with each abnormality condition in the cutting tool 100. The archived information may enable to estimate an extent and /or growth pattern of a particular abnormality condition with time. The archived information may also enable to estimate a remaining life of the cutting tool 100.

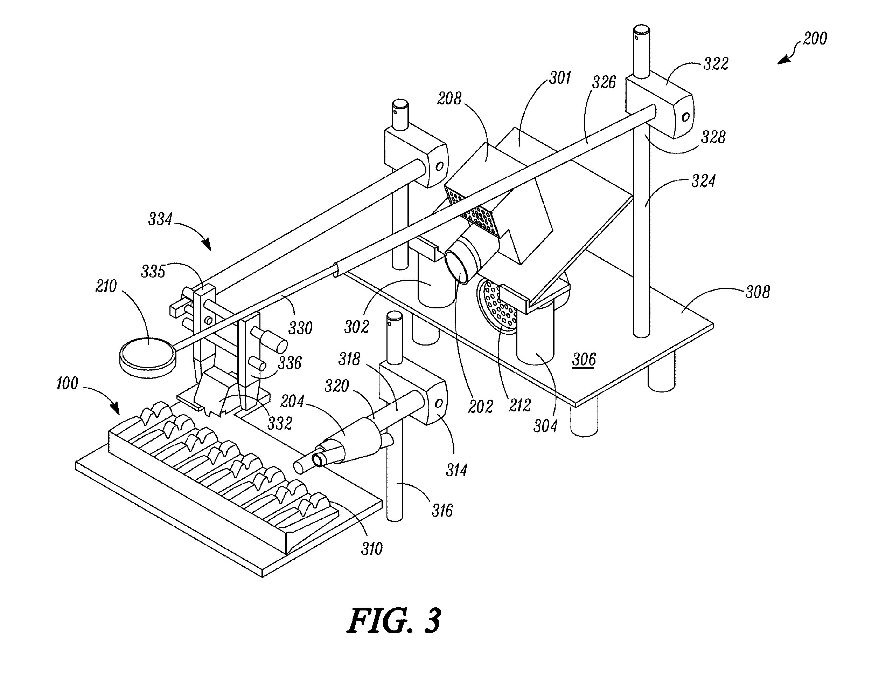

FIG. 3 illustrates a perspective view of the cutting tool abnormality sensing apparatus 200, according to an embodiment of the present invention. The apparatus 200 of the present invention may enable to image the cutting tool 100 while the cutting tool 100 is in operation. As already illustrated in FIG. 2, the apparatus 200 may include the image pickup device 202, and one or more light sources 208, 210, and 212. In an embodiment of the present invention, the image pickup device 202 is mounted on a linear stage 301. Generally, the cutting tool 100, such as the broach cutter 100 (both the broach rougher and the broach finisher 100) has teeth that vary in depth so that during the cutting cycle, material can be efficiently removed from the work piece. Thus, in order to retain the image pickup device 202 in focus with respect to the teeth of the cutting tool 100, the image pickup device 202 is mounted on the linear stage 301. The linear stage 301 is carried by a pair of supports 302, 304 and is configured to tilt with respect to the pair of supports 302, 304. Such movement and tilting of the linear stage 301 enables changes in orientation of the image pickup device 202. The linear stage 301 is configured to move in a transverse direction along an imaginary horizontal plane (not shown). Specifically, a motion of the linear stage 301 is approximately synchronized with the motion of the cutting tool 100. The synchronized motion of the linear stage 301 may enable to keep an approximately constant distance between the teeth of the cutting tool 100 and the face of the image pickup device 202.

The pair of supports 302, 304 carrying the linear stage 301 is connected to a top surface 306 of a first support structure 308 which is positioned proximately to the cutting tool 100. The image pickup device 202 is disposed at a site opposite to a location of the cutting tool 100. Specifically, the image pickup device 202 is positioned, such that the image pickup device 202 gets oriented in direction of teeth 310 of the cutting tool 100. In an embodiment of the present invention, the image pickup device 202 is placed at an angle approximately in a range of about 65 degrees to 75 degrees in a direction normal to the image pickup device 202.

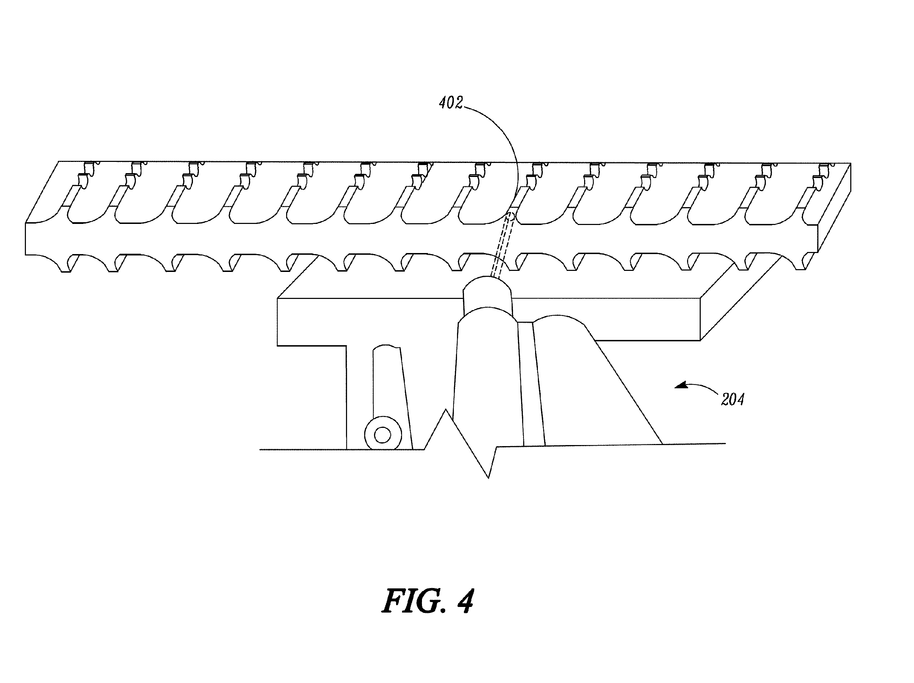

As illustrated in the figures, the apparatus 200 also includes the triggering mechanism 204. In the exemplary embodiment of FIG. 3, the triggering mechanism 204 is the optical trigger 204. The optical trigger 204 is carried by a holding member 314 having a vertical leg 316 connected to a horizontal leg 318. Specifically, the triggering mechanism 204 is connected to an end portion 320 of the horizontal leg 318 of the holding member 314. The triggering mechanism 204 may trigger the image pickup device 202 each time a tooth passes along a field of view of the image pickup device 202. The triggering mechanism 204 will be discussed in details in conjunction with FIG. 4

The apparatus 200 further includes the one or more light sources 208, 210 and 212 as illustrated in FIG. 2. The one or more light sources 208, 210 and 212 selectively illuminate an abnormality region in the cutting tool 100.

As illustrated in FIG. 3, the first light source 208 may be placed atop the image pickup device 202. The first light source 208 is at approximately same angle as of the image pickup device 202. In an embodiment of the present invention, the first light source 208 is mounted on the linear stage 301, which is carried by the top surface 306 of the first support structure 308. In the exemplary embodiment of the FIG. 3, the first light source 208 includes a bar light. However, in alternative embodiments of the present invention the first light source 208 may include any other kind of light such as, but not limited to, a ring light. The first light source 208 is configured to selectively illuminate the faces of the cutting tool 100 which are approximately parallel to the face of the image pickup device 202.

The second light source 210 is placed as overhanging the cutting tool 100. The second light source 210 is placed at an angle of approximately 25 to 35 degrees to the image pickup device 202. In an embodiment of the present invention, the second light source 210 is mounted on a support arrangement 322 having a vertical member 324 and a horizontal member 326. The vertical member 324 is connected to the top surface 306 of the first support structure 308. A free end portion 328 of the vertical member 324 is connected to the horizontal member 326 such that it can be tilted. The adjustable connection of the vertical member 324 and the horizontal member 326 enables angular movement of the vertical member 324 with respect to the horizontal member 326. The second light source 210, being connected to a free end portion 330 of the horizontal member 326, may move with the tilting movement of the vertical member 324 to maintain an overhanging position with respect to the cutting tool 100. Such placement of the second light source 210 may enable the second light source 210 to selectively illuminate a top face of the cutting tool 100. Specifically, the second light source 210 may selectively illuminate sharp tips and steep faces of the cutting tool 100. The first face, sharp tips and steep faces includes the clearance faces 106 of the teeth of the broach finisher 100.

Generally, the cutting tool 100, such as the broach finisher 100 has the pressure faces 104 and the clearance faces 106 that do not lie in the same plane. Thus, the apparatus 200 may further include a prism 332 to image a second face of the teeth of the cutting tool 100. The second face includes the pressure faces 104 of the cutting tool 100, which is not directly visible to the image pickup device 202. In an embodiment of the present invention, the prism 332 is a right-angled prism. The prism 332 is positioned such that one face of the prism 332 is approximately parallel to the image pickup device 202. In the exemplary embodiment of FIG. 3, the prism 332 is held in a prism holder 334 having pair of vertically extending clamps 335, 336. The prism 332 may enable the image pickup device 202 to capture the selectively illuminated pressure faces 104 of the broach finisher 100 within the same viewing frame as of the clearance faces 106 of the broach finisher 100. Thus, the first light source 208, the second light source 210, and the prism 332 illustrated in the apparatus 200 may enable the image pickup device 202 to capture both the clearance faces 106 and the pressure faces 104 at the same time and in the same viewing frame.

Further, the third light source 212 is placed beneath the image pickup device 202. The third light source 212 is placed approximately 90 degrees to the normal. In an embodiment of the present invention, the third light source 212 in carried by the top surface 306 of the first support structure 308. The third light source 212 is positioned such that it selectively illuminates a front face of the teeth of the cutting tool 100. In the exemplary embodiment of FIG.3, the third light source 212 selectively illuminates the front face of the broach rougher. Alternatively, a co-axial light scheme may be employed for illuminating the broach rougher. As per the co-axial light scheme, a neutral density filter at 45 degrees may be used to create a source that is normal to the face of the wear region. The reflected light is also normal and thus, when captured by the image pickup device 202 placed in front of the broach rougher, illuminates the wear regions in the broach rougher.

The selective illumination is provided in a manner such that the reflection of the light is towards the image pickup device 202. Further, the reflection of the light may enable the image pickup device 202 to capture an image which represents a brighter illumination in the wear region of the cutting tool 100 as compared to the background. In an embodiment of the present invention, it is the specular reflection from the edge region of the cutting tool 100 that provides a brighter illumination in the wear region of the cutting tool 100 as compared to the background. Thus, the positioning of the one or more light sources 208, 210, and 212 illustrated in FIG. 3 may enable to image both the broach rougher and the broach finisher 100 using the same apparatus 200.

During cutting operations the cutting tool 100 may encounter high forces and contact pressure. Therefore, coolants and oil lubricants may require to be applied to the cutting tool 100 for both cooling and lubricating the cutting tool 100. However, the presence of oil lubricants and coolants may tend to obliterate/reduce the contrast of the wear region in the images collected by the image pickup device 202. In order to preclude the oil lubricants and coolants from obliterating/reducing the contrast of the wear region in the images collected by the image pickup device 202, the apparatus 200 may include a source of pressurized air (not shown). The pressurized air may be directed towards the cutting tool 100 to remove residual oil lubricants and coolants remaining on the cutting tool 100 during the cutting operation. In an exemplary embodiment of the present invention, a set of hoses may be utilized to provide the burst of pressurized air. The set of hoses may be placed adjacently to the cutting tool 100 at different heights. Particularly, the set of hoses may be positioned such that the cleaning of the cutting tool 100 is performed just before an image of the tooth is being captured by the image pickup device 202.

FIG. 4 illustrates the triggering mechanism 204, according to an embodiment of the invention. As illustrated in FIG. 3, the triggering mechanism 204 is held at the end portion 320 of the horizontal leg 318 of the holding member 314. The holding member 314 is held between the cutting tool 100 and the first support structure 308. The horizontal leg 318 is configured to be adjusted with respect to the vertical leg 316 for positioning the triggering mechanism 204 proximate to the cutting tool 100, preferably facing the cutting tool 100.

Generally, the cutting tool 100, such as the broach cutter 100 may move at a speed in a range from about 3 to 10 meters/minutes depending on the material to be machined. During the end of the cutting cycle, the broach cutter 100 comes back to an initial position and the work piece is fed further or the billet (disc) is rotated to a newer location and the machining commenced again. To image the various surfaces (teeth) of the broach cutter 100, this motion needs to be converted into individual images by the image pickup device 202 while the cutting tool 100 is in motion. Thus, the apparatus 200 includes the triggering mechanism 204 to actuate the image pickup device 202 each time a tooth passes along the field of the view of the image pickup device 202. In an embodiment of the present invention, the triggering mechanism 204 includes the optical trigger 204. In an embodiment, the optical trigger 204 includes a non-contact intensity-based switching mechanism. The non-contact based switching mechanism synchronizes the image pickup device 202 with the motion of the cutting tool 100. The optical trigger 204 is configured to direct a continuous light beam towards the face of the cutting tool 100. With the movement of the cutting tool 100, when a particular tooth, for example a tooth 402 of the cutting tool 100 comes in the path of the continuous light beam (as illustrated in FIG. 4), the continuous light beam gets reflected back. The intensity of the reflection is highest when the tooth passes in front of the light beam and minimal when the other part of the cutting tool 100 such as gullet region of the cutting tool 100 passes through. The reflected light beam may actuate the trigger controller 206 based on the intensity of the reflection and the trigger controller 206 in turns directs the image pickup device 202 to initiate capturing of an image and wait for the next trigger (tooth).

In an alternative embodiment of the present invention, the triggering mechanism 204 may be an internal trigger which is configured on time-based synchronization (not shown). The internal trigger may be synchronized with the movement of the cutting tool 100. Thus, the internal trigger may actuate the image pickup device 202 to take individual images of the teeth at a periodic interval, approximately synchronized with the movement of the cutting tool 100.

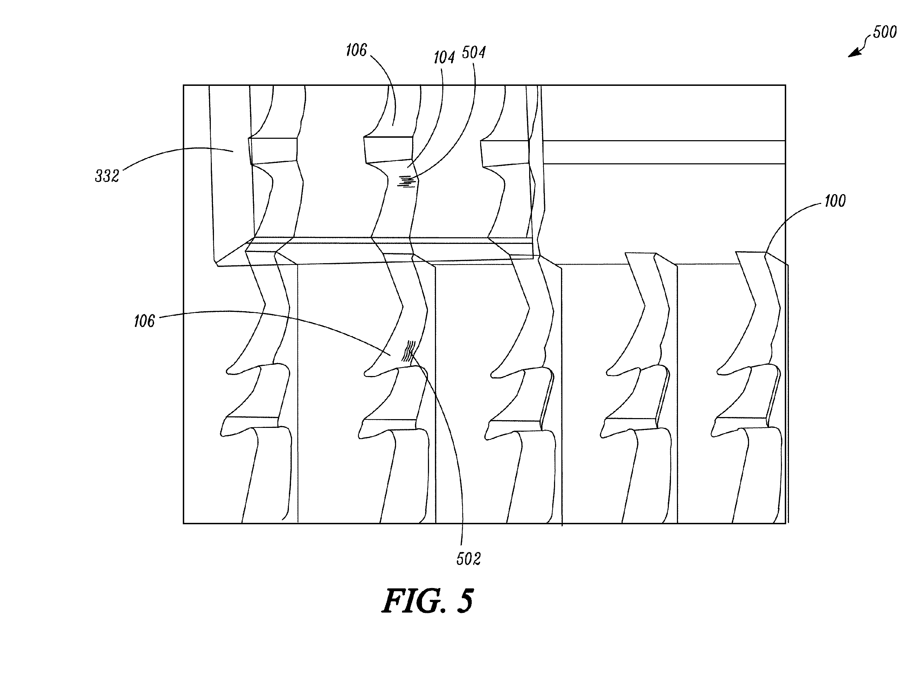

FIG. 5 illustrates an image 500 of abnormality on the broach finisher 100. As illustrated in the apparatus 200, the first light source 208 and the second light source 210 are utilized to selectively illuminate the abnormality, if any, on the clearance faces 106 of the broach finisher 100. The first light source 208 may be placed atop the image pickup device 202. The first light source 208 is configured to selectively illuminate the faces of the cutting tool 100 which are approximately parallel to the face of the image pickup device 202. The second light source 210 is placed as overhanging the cutting tool 100. The second light source 210 is configured to selectively illuminate the top face of the cutting tool 100. Specifically, the second light source 210 may selectively illuminate sharp tips and steep faces of the cutting tool 100. The first face, sharp tips and steep faces includes the clearance faces 106 of the teeth of the broach finisher 100.

Generally, the cutting tool 100, such as the broach finisher 100 has geometry to cut various features that do not lie in the same plane, for example the pressure faces 104 and the clearance faces 106. Thus, the apparatus 200 may further include the prism 332 to image a second face of the teeth of the broach finisher 100. The second face includes the pressure faces 104 of the broach finisher 100 which is not directly visible to the image pickup device 202. The prism 332 may enable the image pickup device 202 to capture the selectively illuminated pressure faces 104 of the broach finisher 100 within the same viewing frame as for the clearance faces 106 of the broach finisher 100.

The selective illumination is provided in a manner such that the reflection of the light is towards the image pickup device 202. In an embodiment of the present invention, it is the specular reflection from the edge region of the broach finisher 100 that provides a brighter illumination in the wear region of the broach finisher 100. Further, the reflection of the light may enable the image pickup device 202 to capture an image which represents a brighter illumination in the wear region of the cutting tool 100 as compared to the background. As illustrated in the FIG. 5, the selective illumination may enable the image pickup device 202 to capture the image 500 of the broach finisher 100, which represents abnormality 502 in the clearance faces 106 and abnormality 504 in the pressure faces 104 of the broach finisher 100.

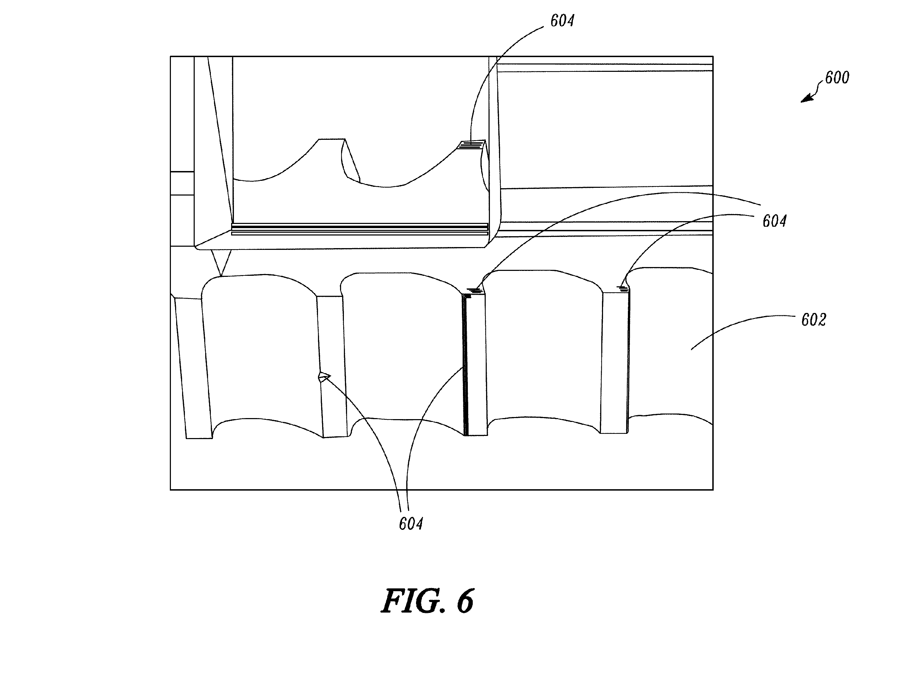

FIG. 6 illustrates an image 600 of abnormality in a broach rougher 602. As illustrated in the apparatus 200, the third light source 212 and/or the first light source 208 are utilized to selectively illuminate the abnormality, if any, on a front face of the broach rougher 602. The third light source 212 is placed beneath the image pickup device 202. The third light source 212 is placed approximately ninety degrees to the normal. The third light source 212 is positioned such that it selectively illuminates a front face of the teeth of the cutting tool 100. As illustrated in FIG. 6, the selective illumination may enable the image pickup device 202 to capture the image 600 of the broach rougher 602, which represents abnormality 604 in the front face of the broach rougher 602. Alternatively, a co-axial light scheme may be employed for illuminating the broach rougher 602. As per the co-axial light scheme, a neutral density filter at 45 degrees may be used to create a source that is normal to the face of the wear region. The reflected light is also normal and thus, when captured by the image pickup device 202, placed in front of the broach rougher 602, illuminates the wear regions in the broach rougher 602.

Various aspects and embodiments of the invention are indicated in the following clauses:
1. A cutting tool abnormality sensing apparatus, the apparatus comprising:
   an image pickup device for taking individual images of teeth of the cutting tool;
   a triggering mechanism to trigger the image pickup device each time a tooth passes along a field of view of the image pickup device;
   one or more light sources to illuminate the cutting tool; and,
   an image processor to process one or more criteria in the individual images for quantifying an extent of abnormality in the cutting tool.
2. The apparatus of clause 1, wherein the apparatus senses the abnormality while the cutting tool is in operation.
3. The apparatus of either of clause 1 or 2, wherein the abnormality comprises at least one of wear of the tooth material, nicks, breakage of tooth in the cutting tool.
4. The apparatus of any preceding clause, further comprises a digital archiving device to store the abnormality condition of the cutting tool.
5. The apparatus of any preceding clause, wherein the image pickup device comprises a digital camera.
6. The apparatus of any preceding clause, wherein the image pickup device is disposed at a site opposite to a location of the cutting tool.
7. The apparatus of any preceding clause, wherein the image pickup device is mounted on a linear stage.
8. The apparatus of any preceding clause, wherein a motion of the linear stage is approximately synchronized with a motion of the cutting tool.
9. The apparatus of any preceding clause, wherein the image pickup device is placed at an angle approximately in a range of about 65 degrees to 75 degrees in a direction to the normal.
10. The apparatus of any of clauses 1 to 8, wherein the image pickup device is placed at an angle of 90 degrees in a direction to the normal.
11. The apparatus of any preceding clause, wherein the triggering mechanism comprises an optical trigger.
12. The apparatus of clause 11, wherein the optical trigger comprises a non-contact intensity-based switching mechanism.
13. The apparatus of any preceding clause, wherein the one or more light sources are light emitting diodes.
14. The apparatus of any preceding clause, wherein the one or more light sources selectively illuminates an abnormality region of the cutting tool.
15. The apparatus of any preceding clause, wherein the one or more light sources comprises three light sources.
16. The apparatus of clause 15, wherein a first light source is placed atop the image pickup device, a second light source is placed as overhanging the cutting tool and a third light source is placed beneath the image pickup device.
17. The apparatus of clause 16, wherein the first light source selectively illuminates a face of the teeth of the cutting tool that are approximately parallel to the image pickup device, the second light source selectively illuminates tips of the teeth of the cutting tool and angular face of the cutting tool, and the third light source selectively illuminates a front face of the teeth of the cutting tool.
18. The apparatus of any preceding clause, further comprises a prism to image a second face of the teeth of the cutting tool, wherein the second face is not directly visible to the image pickup device.
19. The apparatus of clause 18, wherein the prism is a right-angled prism.
20. The apparatus of clause 19, wherein the right-angled prism is placed with one face of the prism approximately parallel to the image pickup device.
21. The apparatus of any preceding clause further comprising a source of pressurized air.
22. The apparatus of any preceding clause, wherein the cutting tool is at least one of broach cutter, miller, rougher, finisher.

## Claims

1. A cutting tool abnormality sensing apparatus (200), the apparatus (200) comprising:
an image pickup device (202) for taking individual images of teeth of the cutting tool (100);
a triggering mechanism (204) to trigger the image pickup device (202) each time a tooth passes along a field of view of the image pickup device (202);
one or more light sources (208, 210 and 212) to illuminate the cutting tool (100); and,
an image processor (220) to process one or more criteria in the individual images for quantifying an extent of abnormality in the cutting tool (100).

2. The apparatus (200) of claim 1, wherein the apparatus (200) senses the abnormality while the cutting tool (100) is in operation.

3. The apparatus (200) of either of claim 1 or 2, wherein the abnormality comprises at least one of wear of the tooth material, nicks, breakage of tooth in the cutting tool (100).

4. The apparatus (200) of any preceding claim, further comprises a digital archiving device to store the abnormality condition of the cutting tool (100).

5. The apparatus (200) of any preceding claim, wherein the image pickup device (202) comprises a digital camera.

6. The apparatus (200) of any preceding claim, wherein the image pickup device (202) is disposed at a site opposite to a location of the cutting tool (100).

7. The apparatus (200) of any preceding claim, wherein the image pickup device (202) is mounted on a linear stage (301).

8. The apparatus of any preceding claim, wherein the one or more light sources (208, 210 and 212) comprises three light sources.

9. The apparatus of claim 8, wherein a first light source (208) is placed atop the image pickup device (202), a second light source (210) is placed as overhanging the cutting tool (100) and a third light source (212) is placed beneath the image pickup device (202).

10. The apparatus (200) of claim 9, wherein the first light source (208) selectively illuminates a face of the teeth of the cutting tool (100) that are approximately parallel to the image pickup device (202), the second light source (210) selectively illuminates tips of the teeth of the cutting tool (100) and angular face of the cutting tool (100), and the third light source (212) selectively illuminates a front face of the teeth of the cutting tool (100).
